# EUROPÄISCHE PATENTSCHRIFT

(11) **EP 2 215 436 B1**
(45) Veröffentlichungstag und Bekanntmachung des Hinweises auf die Patenterteilung: **16.05.2018**
(21) Anmeldenummer: 08852471.5
(22) Anmeldetag: 31.10.2008
(51) Int. Cl.: G01F 23/24

(54) **SENSORANORDNUNG ZUR BESTIMMUNG EINES TANKFÜLLSTANDS UND TANK MIT SENSORANORDNUNG**
SENSOR ARRANGEMENT FOR DETERMINING A TANK FILL LEVEL AND TANK HAVING SAID SENSOR ARRANGEMENT
ENSEMBLE CAPTEUR POUR DÉTERMINER LE NIVEAU DANS UN RÉSERVOIR ET RÉSERVOIR MUNI D'UN TEL ENSEMBLE CAPTEUR

(30) Priorität: 23.11.2007 DE 102007056545
(43) Veröffentlichungstag der Anmeldung: 11.08.2010
(73) Patentinhaber: Robert Bosch GmbH, 70442 Stuttgart (DE)
(72) Erfinder: ULRICH, Markus, 73635 Rudersberg (DE); BABIC, Vlatko, 50823 Köln (DE); KRENZ, Guenther, 71711 Steinheim (DE); HAEBERER, Rainer, 75015 Bretten (DE); RATZEL, Wolf-Ingo, 70565 Stuttgart (DE); HEZEL, Bruno, 70565 Stuttgart (DE); GERLACH, Michael, 71672 Marbach A.n. (DE); STRAUS, Vaclav, 37008 Ceske Budejovice (CZ)
(86) Internationale Anmeldenummer: PCT/EP2008/064828
(87) Internationale Veröffentlichungsnummer: WO 2009/065721

(56) Entgegenhaltungen:
- EP-A- 1 037 028
- DE-A1- 4 128 793
- DE-B1- 1 515 270
- DE-U1- 9 215 047

## Beschreibung

### Stand der Technik

Die Erfindung geht aus von einer Sensoranordnung zur Bestimmung eines Füllstands einer in einem Tank enthaltenen Flüssigkeit bzw. von einem Tank für eine Flüssigkeit mit einer Sensoranordnung zur Bestimmung eines Füllstands nach der Gattung der unabhängigen Ansprüche.

Bei Fahrzeugen mit Verbrennungsmotor muss aufgrund der in den nächsten Jahren anstehenden verschärften Abgasgesetzgebung unter anderem der Schadstoff Stickstoffoxid in erhöhtem Maß reduziert werden. Ein Verfahren, das hierbei zur Anwendung kommt, ist das Verfahren der selektiven und katalytischen Reduktion, bei dem der Schadstoff Stickoxid unter Zuhilfenahme eines flüssigen Reduktionsmittels, beispielsweise einer wässrigen Harnstofflösung, zu Stickstoff und Wasser reduziert wird. Das flüssige Reduktionsmittel wird hierbei in einem Tank gelagert und mittels einer Pumpe über eine Leitung von einem Tank zu einer Dosierstelle befördert. Ein Füllstandssensor zeigt hierbei zweckmäßiger Weise den Füllstand des Tanks an.

Aus der DE 101 62 269 ist bereits eine Vorrichtung zum Bestimmen des Füllstands einer Flüssigkeit bekannt, die unterschiedlich lange, in Kunststoff eingespritzte Messelektroden aufweist.

Weiterhin ist aus der US 6,063,350 bekannt, einen Temperatursensor und einen Füllstandssensor für einen Harnstofftank über einem gemeinsamen mehrpoligen Stecker zu kontaktieren.

Aus der DE 15 15 270 B1 geht ferner eine Elektrodensteuerung für Flüssigkeitsbehälter mit steigendem und fallendem Flüssigkeitsniveau, insbesondere für
Brühevorratsbehälter von Kaffeemaschinen, hervor, bei welcher eine Niveauelektrode in ein oben dicht abgeschlossenes und unten offenes Elektrodengehäuse eingeführt ist.

### Offenbarung der Erfindung

Die erfindungsgemäße Sensoranordnung zur Bestimmung eines Füllstands bzw. der erfindungsgemäße Tank mit Sensoranordnung mit den kennzeichnenden Merkmale der unabhängigen Ansprüche haben demgegenüber den Vorteil, eine gegen Fehlfunktionen geschützte und korrosionsfeste Vorratshaltung bzw. Füllstandserfassung eines flüssigen Reduktionsmittels zu gewährleisten. Darüber hinaus ist die Sensoranordnung bzw. der Tank robust und ausfallsicher gegenüber den im Dauerbetrieb auftretenden beträchtlichen Temperaturschwankungen.

Durch die in den abhängigen Ansprüchen und in der Beschreibung aufgeführten Maßnahmen sind vorteilhafte Weiterbildungen und Verbesserungen des in den unabhängigen Ansprüchen angegebenen Tanks bzw. der angegebenen Sensoranordnung möglich. Besonders vorteilhaft und daher als effektive Maßnahme zu sehen ist, als Arretierungsmittel eine Umfangsnut an den Messelektroden vorzusehen, die diese auf einer Seite axial arretieren, so dass diese auf einer Seite eine definierte Position einnehmen und andererseits axiale Ausgleichsbewegungen zur Gewährleistung einer Toleranz gegenüber Temperaturschwankungen durch die Halterung aufgefangen werden können.

Darüber hinaus ist es vorteilhaft, einen Träger der Sensoranordnung durch Umspritzung der Messelektroden mit Kunststoff zu erzeugen, weil auf diese Weise nicht nur der Träger selbst, sondern auch vorgesehene Haltemittel in einem Herstellungsgang bereitgestellt werden können und darüber hinaus zu einer kompakten Anordnung führen.

Des Weiteren ist es vorteilhaft, mittels eines Sekundärumspritzungsbereichs auf der dem Tankinneren abgewandten Seite der Sensoranordnung eine Sekundärumspritzung vorzusehen, die diese gegen chemisch schädliche Einflüsse auf der Kontaktierungsseite der Elektroden abschirmt.

Darüber hinaus ist es vorteilhaft, im Träger des Füllstandssensors einen Temperatursensor zu integrieren, der in kompakter Bauweise und gegen die Flüssigkeit abgedichtet, zeitnah Temperaturänderungen im Tank registrieren kann.

Wird der Temperatursensor innerhalb des Trägers angeordnet und mit einem Material vergossen bzw. in ein Material eingespritzt, das einstückig mit der Sekundärumspritzung in Verbindung steht, wird in einfacher Weise eine definierte Lage des Temperatursensors und eine gute thermische Ankopplung an die im Tank befindliche Flüssigkeit gewährleistet sowie eine stabile und dennoch kompakte Anordnung zur Verfügung gestellt.

Weitere Vorteile ergeben sich durch die weiteren in den weiteren abhängigen Ansprüchen und in der Beschreibung aufgeführten Maßnahmen.

### Kurze Beschreibung der Zeichnungen

Ausführungsbeispiele der Erfindung sind in der Zeichnung dargestellt und in der nachfolgenden Beschreibung näher erläutert. Es zeigen:
- Figur 1: einen Tank mit Füllstandssensor, der nicht Teil der Erfindung ist,
- Figur 2: einen zweiten Füllstandssensor, der nicht Teil der Erfindung ist,
- Figur 3: einen dritten, erfindungsgemäßen Füllstandssensor,
- Figur 4: eine Teilansicht einer Sensoranordnung zur Bestimmung eines Füllstands und
- Figur 5: eine schematische Ansicht einer Sensoranordnung mit integriertem Temperatursensor.

### Ausführungsformen der Erfindung

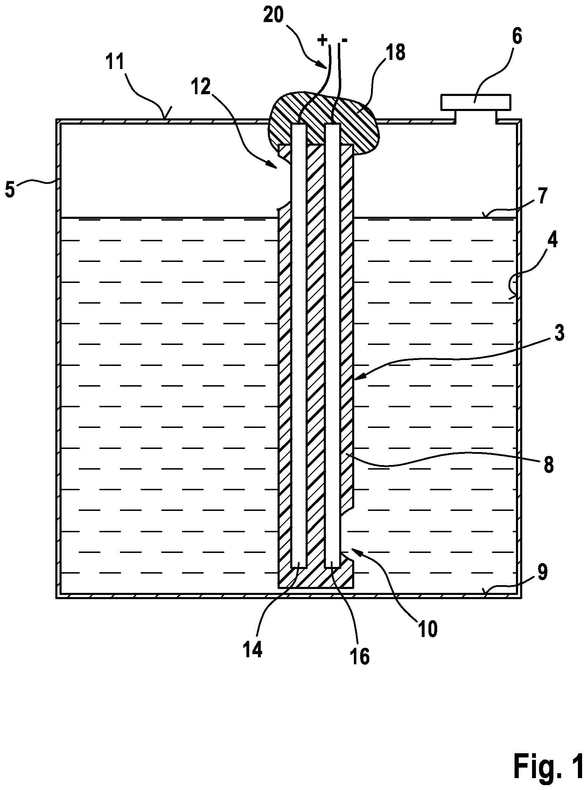

Figur 1 zeigt einen Tank 5 mit einem innerhalb des Tanks angeordneten, nicht erfindungsgemässen, Füllstandssensor 3, der sich vom Boden 9 des Tanks bis zum höchsten im Tank erreichbaren Flüssigkeitspegel 7 einer wässrigen Harnstofflösung ("Ad Blue") im Wesentlichen parallel zur seitlichen Tankwand 4 erstreckt. Auf der Oberseite des Tanks, an der eine verschließbare Öffnung 6 des Tanks angeordnet ist, wird der Füllstandssensor 3 mittels eines mit der Tankoberseite verbundenen Abdeckbereichs 18 in senkrechter Position gehalten. Der Füllstandssensor 3 weist eine als Metallstift ausgebildete erste Messelektrode 14 und eine ebenfalls als Metallstift ausgebildete zweite Messelektrode 16 auf. Beide Messelektroden sind in einem Träger 8 eingebettet, der diese mit Ausnahme jeweils eines Messfensters vollständig umgibt. Die erste Messelektrode 14 kann hierbei über ein oberes Messfenster 12, die durch eine entsprechende Aussparung im Träger 8 gebildet ist, mit der im Tank befindlichen Flüssigkeit in elektrischen Kontakt treten, sofern deren Pegel 7 einen bestimmten maximalen Wert überschreitet. Die zweite Messelektrode 16, im Folgenden auch als Referenzelektrode bezeichnet, weist ein unteres Messfenster 10 auf, das in Bodennähe des Tanks angeordnet ist. Auf der der Tankoberseite 11 zugewandten Seite sind die beiden Messelektroden mit einer elektrischen Kontaktierung 20 verbunden, wobei die Messelektroden an dieser Stelle aus dem Träger 8 herausragen, jedoch zusammen mit dem den Messelektroden zugewandten Teil der elektrischen Kontaktierung 20 von dem Abdeckbereich 18 umgeben sind.

Der Füllstandssensor 3 ermöglicht eine diskontinuierliche Füllstandsmessung. Sind beide Messelektroden mit der im Tank befindlichen Flüssigkeit in elektrischem Kontakt, weil beide Messfenster zumindest teilweise in die Flüssigkeit eintauchen, so kann bei an der der elektrischen Kontaktierung 20 angelegter elektrischer Spannung über die Flüssigkeit und die Messelektroden ein elektrischer Strom fließen. Ein fließender elektrischer Strom ist das Signal, dass der Tank voll ist. Steht die Flüssigkeit zwischen den beiden Messfenstern 12 bzw. 10 der beiden gleich langen in das Kunststoffgehäuse eingespritzten Metallstifte, so ist der Stromkreis unterbrochen, d. h. es fließt kein Strom, was bedeutet, dass der Tank nicht voll ist. Gleiches gilt, wenn der Flüssigkeitspegel unter das Messfenster 10 absinkt. Der die elektrische Kontaktierung gegen Flüssigkeitseinwirkungen abschirmende und den Füllstandssensor in seiner senkrechten Position haltende Abdeckbereich 18 ist hierbei als Sekundärumspritzung aus Kunststoff auf dem als Primärumspritzung ausgebildeten Träger 8 ausgeführt; dies gewährleistet einen sicheren Betrieb des Füllstandssensors auch bei Verwendung chemisch aggressiver Materialien, wie beispielsweise einer wässrigen Harnstofflösung.

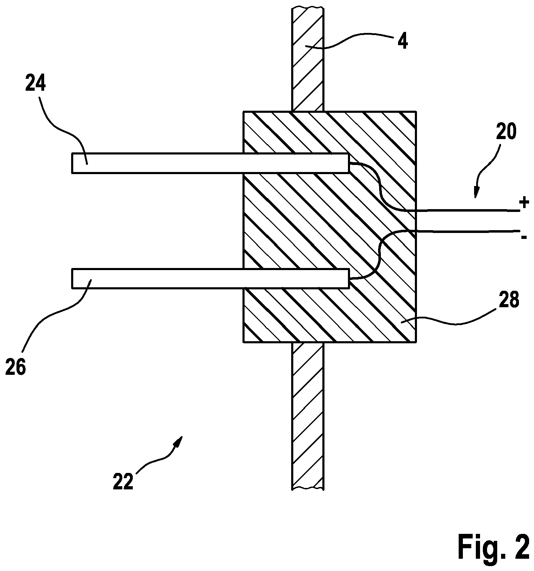

Figur 2 zeigt eine Variante 22 eines, nicht erfindungsgemässen, Füllstandssensors für einen radialen Anbau im Tank. Hierbei ist in einer senkrechten Tankwand 4 ein Trägerelement 28 flüssigkeitsdicht integriert. Das Trägerelement hält zwei Messstifte parallel zueinander in waagerechter Position. Dabei ist der erste Messstift 24 oberhalb des zweiten Messstifts 26 angeordnet. Eine elektrische Kontaktierung 20 ist aus dem Trägerelement 28 herausgeführt zur Kontaktierung des Füllstandssensors außerhalb des Tanks.
Ähnlich wie bei der Anordnung nach Figur 1 schließt sich ein Stromkreis zwischen den beiden Messstiften 24 und 26, sobald beide Messstifte aufgrund hinreichend hohen Füllstands im Tank mit der im Tank befindlichen Flüssigkeit in Berührung kommen.

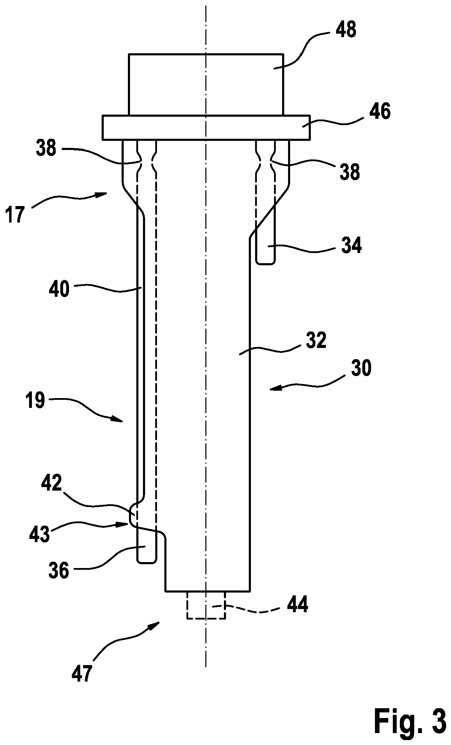

Figur 3 zeigt einen erfindungsgemässen Füllstandssensor bzw. eine Sensoranordnung 30 zur Bestimmung eines Füllstands von AdBlue in einem Reduktionsmitteltank. Sie weist eine erste Messelektrode 34 und eine parallel angeordnete, längere zweite Messelektrode 36 auf, die als Metallstifte ausgeführt sind, wobei die längere Elektrode als Referenzelektrode dient. Die beiden Messelektroden werden von einem Träger 32 gehalten, der durch teilweise Umspritzung der Elektroden mit Kunststoff hergestellt ist. Beide Messelektroden weisen auf der im Folgenden als Arretierungsseite 17 bezeichneten Seite ein als Umfangsnut 38 ausgebildetes Arretierungsmittel auf, das vollständig vom (Primär-) Kunststoffumspritzungsbereich bzw. Träger 32 umschlossen ist. Die Sensoranordnung 30 ist dazu eingerichtet, in ähnlicher Weise wie der Sensor nach Figur 1, senkrecht parallel zu einer seitlichen Tankwand im Inneren eines Tanks bzw. Teiltanks eingebaut zu werden. Die Arretierungsseite 17 der Messelektroden befindet sich dann nahe der Oberseite 11 des Tanks. Die Umfangsnute 38 stehen ungefähr auf gleicher Höhe, während die beiden Messelektroden unterschiedlich tief in den Tank hineinragen; die längere, zweite Messelektrode 36 dient hierbei als Referenzelektrode. Die kürzere Messelektrode 34 wird lediglich auf ihrer der Arretierungsseite 17 zugewandten Hälfte vom Träger 32 gehalten, während die der Arretierungsseite 17 abgewandte Hälfte frei nach unten ragt, so dass sie in diesem Bereich auf ihrem gesamten Umfang bei entsprechendem Flüssigkeitsstand im Tank von Flüssigkeit benetzt werden kann. Der Referenzstift 36 ist nicht nur im Bereich des Arretierungsmittels 38 mit Kunststoff umspritzt, sondern in einem mittleren Bereich 40 zusätzlich halbseitig vom Primärkunststoffumspritzungsbereich 32 umgeben. Auf der der Arretierungsseite 17 abgewandten Seite 19 der Referenzelektrode 36 weist der Träger 32 ein Haltemittel 42 zur partiellen radialen Fixierung der Referenzelektrode auf. Dieses Haltemittel ist einstückig mit dem Träger 32 verbunden und umgibt die Referenzelektrode ähnlich wie ein Achslager vollständig entlang ihres Umfangs. Jenseits der Arretierungsseite 17, des mittleren Bereichs 40 und des Haltemittels 42 ragt das Ende der Referenzelektrode frei nach unten, ähnlich wie die der Arretierungsseite abgewandten Hälfte der ersten Messelektrode. Der das Haltemittel 42 bildende Bereich 43 des Trägers 32 kann dabei in einem Arbeitsgang im Rahmen einer geeignet durchgeführten Umspritzung der Messelektroden mit Kunststoff hergestellt werden. Der Träger 32 weist als weiteren einstückig mit ihm verbundenen Bestandteil eine Abschlusskante 46 auf, auf die eine Sekundärumspritzung aus Kunststoff als Abdeckbereich 48 aufgebracht ist. Dieser Abdeckbereich 48 dient, in ähnlicher Weise wie bei der Sensoranordnung nach Figur 1, zur flüssigkeitsdichten Abdeckung der in Figur 3 nicht näher dargestellten elektrischen Kontakte der Messelektroden auf der Oberseite eines Tanks. Auf der Unterseite 47 der Sensoranordnung, die in Bodennähe eines Tanks angeordnet wird, befindet sich wahlweise ein Temperatursensor 44 zur Messung der Temperatur der im Tank befindlichen Flüssigkeit.

Zur Vermeidung von Fehlfunktionen und zur Vermeidung von Korrosion im Inneren der Sensoren für Füllstand bzw. Temperatur müssen die Messelemente geeignet gegenüber dem chemisch aggressiven Ad Blue abgedichtet werden. Hierbei ist eine Primärumspritzung 32 der als Metallstifte ausgebildeten Messelektroden und eine sich anschließende Sekundärumspritzung 48, die den Sensorkopf bildet, vorgesehen. Diese Maßnahme, also das Vorsehen einer Primär- und einer Sekundärumspritzung, ist erforderlich, da die Einlegeteile bzw. Messelektroden bzw. eine mit ihnen verbundene elektrische Kontaktierung nicht frei fliegend eingespritzt werden können. Zwischen Primär- und Sekundärumspritzung können Spalten entstehen, die bei Temperaturwechsel durch die unterschiedlichen Wärmeausdehnungskoeffizienten der Einlegeteile aus Stahl (Messelektroden) und dem umgebenden Kunststoff verstärkt werden. Ebenso können im Dauerbetrieb Spalte zwischen den Metallstiften und dem umspritzten Kunststoffgehäuse 32 entstehen. Die beispielsweise aus Edelstahl hergestellten Metallstifte bzw. Messelektroden 34 und 36 haben einen erheblich kleineren Wärmeausdehnungskoeffizienten, als der Kunststoffkörper 32. Darauf ausgerichtet ist das Konstruktionsprinzip der Sensoranordnung nach Figur 3. Die Messelektroden sind nur im oberen Bereich, d. h. auf der Arretierungsseite 17, jeweils durch eine Umfangsnut 38 axial fest im Kunststoff fixiert, während sich die Metallstifte im mittleren, halb umspritzen Bereich 40 bzw. im Bereich des Haltemittels 42 bzw. jenseits davon axial bewegen können, zumal die Stifte stirnseitig, d. h. auf der der Unterseite 47 der Sensoranordnung zugewandten Seite, aus dem Kunststoff ragen. Diese Konstruktion gewährleistet eine unterschiedliche axiale Wärmeausdehnung der Metallstifte relativ zum Kunststoffkörper 32.

Alternativ kann die Sensoranordnung auch mehr als zwei Messelektroden aufweisen, die ebenfalls zueinander angeordnet sind, jedoch abgestufte Längen zwischen der Länge der kürzesten Elektrode 34 und der Länge der längsten, als Referenzelektrode verwendeten Elektrode 36 aufweisen. Somit kann anhand der elektrischen Leitfähigkeit zwischen dem jeweiligen Messstift und der Referenzelektrode 36 auf das Erreichen bzw. Nichterreichen mehr als einer Füllstandsposition im Tank geschlossen werden. Alternativ kann der Temperatursensor 44 auch weggelassen werden. In einer weiteren alternativen Ausführungsform können die Referenzelektrode 36 bzw. die Elektroden, die in einem mittleren Bereich 40 halbseitig in den Träger 32 eingebettet sind, auch auf ihrer dem Tankinneren zugewandten Seite von einer dünnen Kunststoffschicht bedeckt sein, die das Ausdehnungsverhalten der Metallstifte im Wesentlichen unbeeinflusst lässt. Der Abdeckbereich 48 kann anstelle einer Sekundärumspritzung als Gehäuse ausgeführt sein, das auf der Abschlusskante 46 des Trägers 32 montiert wird.

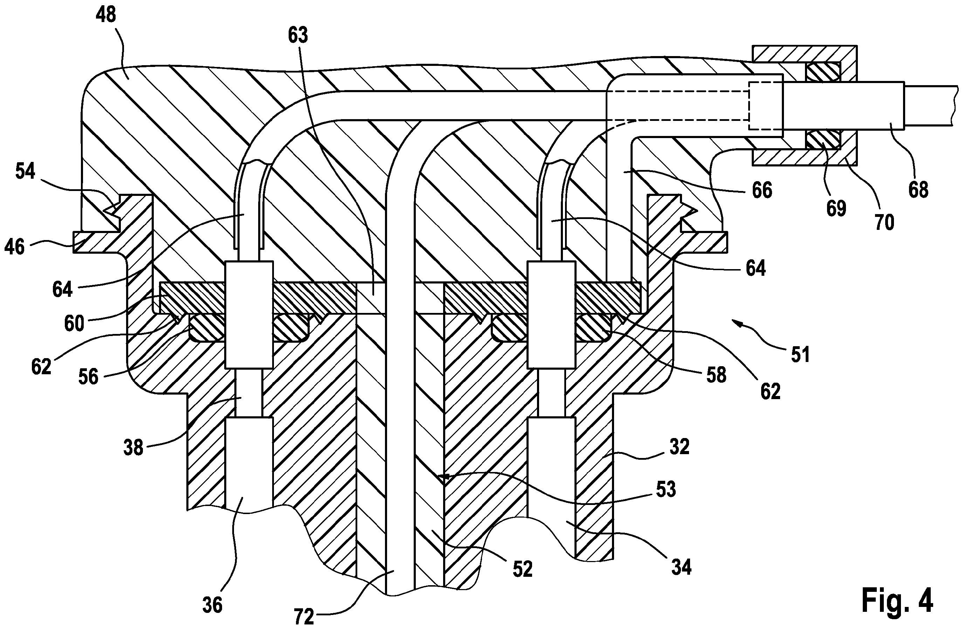

Figur 4 zeigt eine Teilansicht 51 einer Sensoranordnung zur Bestimmung eines Füllstands. Dargestellt ist der Bereich des Sensorkopfs, der nicht in die Flüssigkeit eintaucht und über den die Messelektroden 34 bzw. 36 elektrisch kontaktiert werden. Gleiche oder ähnliche Bestandteile, wie bereits zuvor beschrieben, werden mit gleichen Bezugszeichen dargestellt und nicht nochmals näher erläutert. Die Messelektroden ragen jenseits der Umfangsnut 38 auf der dem Tankinneren abgewandten Seite über den Träger 32 hinaus. Dort sind sie jeweils mit einer elektrischen Kontaktierung 64 verbunden, die, relativ zueinander, elektrisch isoliert in ein gemeinsames Rundkabel 68 übergeht. Dieses elektrische Rundkabel 68 führt zu einer elektrischen Auswerteschaltung bzw. zu einem elektronischen Steuergerät, das auch durch das Motorsteuergerät gebildet sein kann. Die Messelektroden sind am oberen Ende des Trägers mittels als O-Ringe ausgebildeten Dichtelementen 56 bzw. 58 abgedichtet. Auf der dem Tankinneren zugewandten Seite werden die Dichtelemente vom Träger 32 begrenzt, auf der dem Tankinneren abgewandten Seite sind sie mittels einer auf dem Träger 32 angebrachten Trennplatte 60 vom restlichen Aufbau des Sensorkopfs abgetrennt. Die Trennplatte 60 weist hierbei Stege 62 auf, die in den Träger 32 eingreifen und zur radialen Fixierung der Trennplatte während der Montage dienen. Die Messelektroden durchgreifen hierbei die Trennplatte 60, um auf der den Umfangsnuten 38 abgewandten Seite mit der elektrischen Kontaktierung 64 in Verbindung stehen zu können. Die Trennplatte 60 weist ein zentrales Loch 63 auf, durch das eine vom elektrischen Rundkabel 68 ausgehende, vereinfacht dargestellte elektrische Doppelleitung 72 in Richtung Tankboden geführt ist. Diese Doppelleitung 72 dient zur elektrischen Kontaktierung eines nicht näher dargestellten Temperatursensors. Die elektrische Doppelleitung 72 liegt hierbei in einem röhrenförmigen Bereich 52, der mit dem gleichen Material 43 ausgefüllt ist, aus dem auch der als Sekundärumspritzung ausgeführte Abdeckbereich 48 besteht. Abdeckbereich 48 und röhrenförmiger Bereich 53 stehen hierbei einstückig miteinander in Verbindung und können in einem einzigen geeignet ausgelegten Umspritzungsvorgang hergestellt werden. Dabei kann das gleiche Material bzw. der gleiche Kunststoff verwendet werden, aus dem der Träger 32 besteht, alternativ ein anderes Material, das einen ähnlichen Wärmeausdehnungskoeffizienten wie das Material des Trägers 32 besitzt. Die elektrischen Kontaktierungen 64 können durch Löten, Schweißen oder Pressen hergestellt werden; das elektrische Rundkabel 68 wird mittels einer Kabelhalterung 66 fixiert, die auf der Trennplatte 60 randständig befestigt ist.

Bevor die Sekundärumspritzung bzw. die Herstellung des Abdeckbereichs 48 erfolgt, werden die bereits genannten O-Ring-Abdichtungen 56 bzw. 58 gegenüber der Sekundärumspritzung mittels der ebenfalls beschriebenen Trenn- bzw. Montageplatte 60 abgedichtet. Diese über die Stege 62 in den Träger 32 eingehakte Montageplatte verhindert durch eine enge Führung im Bereich der Metallstifte sowie umfangsseitig ein Eintreten flüssigen Kunststoffs in den O-Ring-Raum bei der Herstellung des Abdeckbereichs 48. Die feinen Stege 62 unterstützen hierbei eine axiale Abdichtung des O-Ring-Raumes. Die Kabelhalterung 66 gewährleistet, dass das Kabel bei der Sekundärumspritzung in seiner Lage fixiert ist. In der Anordnung nach Figur 4 wird die aus Figur 3 bekannte Abschlusskante 46 des Trägers 32 durch einen umlaufenden Steg an der Primärumspritzung gebildet, der überdies eine als Haken 54 ausgebildete Aufschmelzkante aufweist. Dieser Steg bzw. diese Aufschmelzkante wird von der Sekundärumspritzung umflossen. Durch die Schwindung der Sekundärumspritzung beim Abkühlen während des Herstellungsprozesses wird sich die Sekundärumspritzung straff am umlaufenden Steg anlegen und somit die Aufschmelzkante, die während des Spritzvorgangs durch das Anschmelzen eine partielle Dichtstelle erzeugt hat, kraftmäßig entlasten. Das Rundkabel 68, welches aus der Sekundärumspritzung 48 hinausragt, wird über eine mechanische Abdichtung mittels eines Dichtelements 69 aus einem Elastomer-Material und einem übergestülpten Spannelement 70 abgedichtet. Das Dichtelement 69, beispielsweise ein O-Ring, ist eine Radialabdichtung, die durch eine zusätzliche axiale Kraftkomponente mittels des übergestülpten Spannelements 70 verstärkt wird. Das beispielsweise als Kunststoffhülse ausgebildete Spannelement 70 ist über eine Kunststoffverschweißung mit der Sekundärumspritzung verbunden.

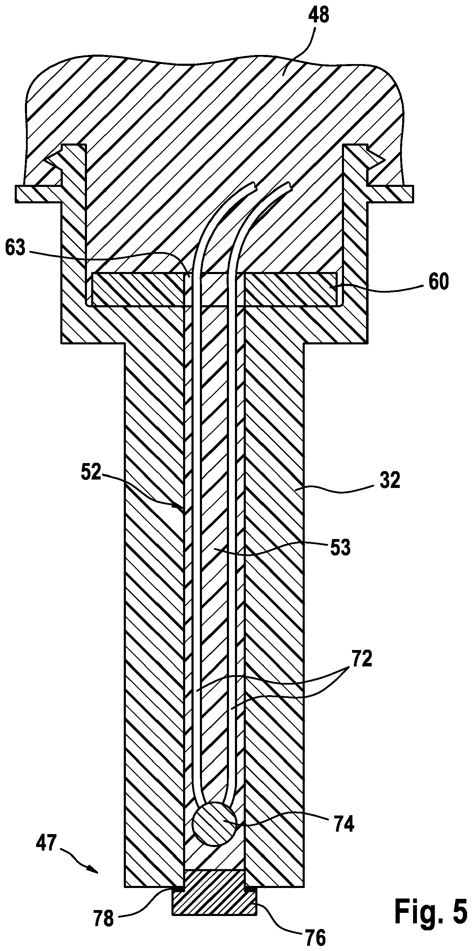

Figur 5 zeigt eine teilschematische Ansicht eines Füllstandssensors mit integriertem, als NTC-Widerstand ausgebildeten Temperatursensor 74. Details wie die zur Füllstandsmessung erforderlichen Messelektroden und die elektrische Kontaktierung dieser Messelektroden sind in Figur 5 nicht näher dargestellt; sie dient zur Erläuterung des Aufbaus bzw. der Integration des Temperatursensors in die Sensoranordnung zur Bestimmung eines Füllstands. Die in Figur 4 bereits schematisch dargestellte elektrische Doppelleitung 72 führt zur Unterseite 47 der Sensoranordnung, wo sie den NTC-Widerstand, also einen Widerstand mit negativem Temperaturkoeffizienten, elektrisch kontaktiert. Der röhrenförmige Bereich 52 erstreckt sich hierbei von dem Abdeckbereich 48 bis zur Unterseite 47 der Sensoranordnung und ist im Wesentlichen vollständig mit dem Material der Sekundärumspritzung ausgefüllt. Zur Unterseite hin ist der röhrenförmige Bereich mittels eines Verschlusses 76 gegen die Tankflüssigkeit abgedichtet, wobei der Verschluss über einen umfangsseitigen Schweißbereich 78 mit dem Träger 32 verbunden ist.

Die Kombination eines Füllstands- mit einem Temperatursensor, d. h. die Anordnung beider Messelemente in einem Gehäuse mit einem gemeinsamen Kabelabgang, ermöglicht einen kompakten und gegen chemisch aggressive Materialen resistenten Aufbau. Die Temperatur soll zweckmäßiger Weise in Bodennähe des Tanks gemessen werden, d. h. in der Nähe bzw. in Höhe des niedrigsten, noch detektierbaren Flüssigkeitspegels. Dementsprechend ist der Temperatursensor 74 ungefähr auf Höhe des Kontaktbereichs der längsten Messelektrode angeordnet, die einen elektrischen Kontakt dieser Messelektrode mit Flüssigkeit im Tank ermöglicht. Hierzu beinhaltet die Primärumspritzung 32 des Füllstandssensors im Zentrum den röhrenförmigen Bereich 52, in welchem der NTC-Widerstand gesteckt werden kann. Die zuvor beschriebene Trennplatte 60 weist ein zentrales Loch 63 auf, durch das die Kabel des Temperatursensors in dem Abdeckbereich geführt werden. Dabei ist es wie beschrieben zweckmäßig, den Temperatursensor einzuspritzen, so kann er die unmittelbare Temperatur in Bodennähe des Tanks rasch und unverfälscht erfassen; wäre er in einer lediglich mit Luft gefüllten Röhre innerhalb des Trägers 32 angeordnet, würde er einerseits lediglich die Temperatur in der Luftröhre messen und andererseits sehr verzögert auf Temperaturänderungen im Tank reagieren. Eine rasche Erfassung der Temperatur im Tank ist jedoch wünschenswert, um frühzeitig durch entsprechendes Beheizen der Tankflüssigkeit ein Einfrieren zu verhindern bzw. eine Heizung rechtzeitig auszuschalten, um eine vorzeitige Alterung der im Tank befindlichen Flüssigkeit zu vermeiden. Die Sekundärumspritzung dringt hierbei während des Herstellungsprozesses durch die Öffnung der Montageplatte in die durchgehende Röhre 52 und umschließt so den Temperatursensor. Abschließend wird diese Röhre durch einen Schweißvorgang mit einer Kapsel bzw. einem Verschluss 76 verschlossen. Somit ist gewährleistet, dass der Temperatursensor völlig abgedichtet gegen das Ad Blue im unteren Bereich des Füllstandssensors arbeiten kann.

## Patentansprüche

1. Sensoranordnung zur Bestimmung eines Füllstands einer in einem Tank (5) enthaltenen Flüssigkeit (7), insbesondere eines Reduktionsmittels zur Entstickung von Abgasen einer Brennkraftmaschine, bei der
- Mindestens eine erste und eine zweite elektrisch leitfähige Messelektrode (14, 16) unterschiedlicher Länge im Wesentlichen parallel zueinander angeordnet sind, wobei sie dazu eingerichtet sind, im Wesentlichen senkrecht im Tank angeordnet zu werden,
- Wobei die Messelektroden zumindest teilweise in einem Träger (32) aus elektrisch nicht leitfähigem Material eingebettet sind,
**dadurch gekennzeichnet, dass**
- Sie auf einer im Folgenden als Arretierungsseite (17) benannten oberen Seite mit Hilfe von Arretierungsmitteln (38) relativ zum Träger (32) starr befestigt sind,
- Wobei das Arretierungsmitteln (38) vollständig vom Träger (32) umschlossen ist,
- Wobei die zweite Messelektrode (36) in einem mittleren Bereich (40) halbseitig entlang ihres Umfangs vom Träger (32) umgeben ist,
- Wobei der Träger (32) auf der der Arretierungsseite (17) abgewandten Seite (19) ein Haltemittel (42) zur partiellen radialen Fixierung der zweiten Messelektrode (36) aufweist,
- Wobei das Haltemittel (42) einstückig mit dem Träger (32) verbunden ist und die zweite Messelektrode (36) vollständig entlang ihres Umfangs umgibt,
- Wobei jenseits der Arretierungsseite (17), des mittleren Bereichs (40) und des Haltemittels (42) das Ende der zweiten Messelektrode (36) frei nach unten ragt.

2. Sensoranordnung nach Anspruch 1, **dadurch gekennzeichnet, dass** der Träger (32) aus Kunststoff besteht.

3. Sensoranordnung nach einem der vorhergehenden Ansprüche, **dadurch gekennzeichnet, dass** die Arretierungsmittel (38) durch eine Umfangsnut an den Messelektroden (14, 16) gebildet sind.

4. Sensoranordnung nach einem der vorhergehenden Ansprüche, **dadurch gekennzeichnet, dass** der Träger (8) durch Umspritzung der Messelektroden (14, 16) mit dem elektrisch nicht leitfähigen Material hergestellt ist.

5. Sensoranordnung nach einem der vorhergehenden Ansprüche, **dadurch gekennzeichnet, dass** das Haltemittel (42) aus einem als Lager dienenden Bereich des Trägers, insbesondere aus einem den Umfang der Messelektroden vollständig umfassenden Bereich (43), besteht.

6. Sensoranordnung nach einem der vorhergehenden Ansprüche, **dadurch gekennzeichnet, dass** die Messelektroden (14, 16) auf der Arretierungsseite (17) mittels eines Abdeckbereichs (48), insbesondere eines mit dem Träger (32) verhakten (54) Abdeckumspritzungsbereichs, gegen Einwirkungen der Flüssigkeit abgedichtet sind.

7. Sensoranordnung nach Anspruch 7, **dadurch gekennzeichnet, dass** zwischen Abdeckbereich (48) und Träger (32) eine Trennplatte (60) angeordnet ist zur Bedeckung von die Messelektroden (14, 16) abdichtenden Dichtelementen (56, 58).

8. Sensoranordnung nach einem der vorhergehenden Ansprüche, **dadurch gekennzeichnet, dass** ein Temperatursensor (44), insbesondere ein als Temperatursensor dienender elektrischer Widerstand (74) mit negativem Temperaturkoeffizienten, integriert ist.

9. Sensoranordnung nach Anspruch 8, **dadurch gekennzeichnet, dass** der Temperatursensor (44) auf Höhe der der Arretierungsseite abgewandten Seite (19) innerhalb des Trägers (32) angeordnet ist.

10. Sensoranordnung nach Anspruch 9, **dadurch gekennzeichnet, dass** der Träger (32) einen insbesondere zentral angeordneten röhrenförmigen Bereich (52) aufweist, innerhalb dem der Temperatursensor (44) angeordnet ist und der mit dem Abdeckbereich (48) einstückig in Verbindung steht.

11. Tank (5) für eine Flüssigkeit, insbesondere für ein Reduktionsmittel zur Entstickung von Abgasen einer Brennkraftmaschine, mit einer Sensoranordnung (30) zur Bestimmung eines Füllstands der Flüssigkeit nach einem der vorhergehenden Ansprüche.

## Claims

1. Sensor arrangement for determining a filling level of a liquid (7) which is contained in a tank (5), in particular of a reducing agent for the denitrification of exhaust gases of an internal combustion engine, in which sensor arrangement
- at least a first and a second electrically conductive measuring electrode (14, 16) of different lengths are arranged substantially parallel to one another, the said measuring electrodes (14, 16) being set up to be arranged substantially perpendicularly in the tank,
- the measuring electrodes being embedded at least partially in a carrier (32) made from elastically non-conductive material,
**characterized in that**
- they are fastened rigidly relative to the carrier (32) with the aid of locking means (38) on an upper side which is called the locking side (17) in the following text,
- the locking means (38) being enclosed completely by the carrier (32),
- the second measuring electrode (36) being surrounded in a central region (40) on one side along its circumference by the carrier (32),
- the carrier (32) having, on that side (19) which faces away from the locking side (17), a holding means (42) for the partial radial fixing of the second measuring electrode (36),
- the holding means (42) being connected in one piece to the carrier (32) and surrounding the second measuring electrode (36) completely along its circumference,
- the end of the second measuring electrode (36) protruding freely downward beyond the locking side (17), the central region (40) and the holding means (42).

2. Sensor arrangement according to Claim 1, **characterized in that** the carrier (32) consists of plastic.

3. Sensor arrangement according to either of the preceding claims, **characterized in that** the locking means (38) are formed by way of a circumferential groove on the measuring electrodes (14, 16).

4. Sensor arrangement according to one of the preceding claims, **characterized in that** the carrier (8) is produced by way of overmoulding of the measuring electrodes (14, 16) with the electrically non-conductive material.

5. Sensor arrangement according to one of the preceding claims, **characterized in that** the holding means (42) consists of a region of the carrier, which region serves as a bearing, in particular of a region (43) which encompasses the circumference of the measuring electrodes completely.

6. Sensor arrangement according to one of the preceding claims, **characterized in that** the measuring electrodes (14, 16) are sealed against actions of the liquid on the locking side (17) by means of a covering region (48), in particular a covering overmoulded region which is hooked (54) to the carrier (32).

7. Sensor arrangement according to Claim 7, **characterized in that** a dividing plate (60) is arranged between the covering region (48) and the carrier (32) in order to cover sealing elements (56, 58) which seal the measuring electrodes (14, 16).

8. Sensor arrangement according to one of the preceding claims, **characterized in that** a temperature sensor (44) is integrated, in particular an electric resistance (74) with a negative coefficient of temperature which serves as a temperature sensor.

9. Sensor arrangement according to Claim 8, **characterized in that** the temperature sensor (44) is arranged within the carrier (32) at the level of the side (19) which faces away from the locking side.

10. Sensor arrangement according to Claim 9, **characterized in that** the carrier (32) has a tubular region (52) which is arranged, in particular, centrally, within which the temperature sensor (44) is arranged, and which is connected in one piece to the covering region (48).

11. Tank (5) for a liquid, in particular for a reducing agent for the denitrification of exhaust gases of an internal combustion engine, having a sensor arrangement (30) for determining a filling level of the liquid according to one of the preceding claims.

## Revendications

1. Ensemble de capteur pour la détermination d'un niveau de remplissage d'un liquide (7) contenu dans un réservoir (5), en particulier d'un agent réducteur pour la dénitrification de gaz d'échappement d'un moteur à combustion interne, dans lequel
- au moins une première et une deuxième électrodes de mesure électriquement conductrices (14, 16) de longueur différente sont disposées essentiellement parallèlement l'une à l'autre, dans lequel elles sont conçues de façon à être disposées essentiellement verticalement dans le réservoir,
- dans lequel les électrodes de mesure sont noyées au moins en partie dans un support (32) en un matériau électriquement non conducteur,
**caractérisé en ce que**
- elles sont fixées rigidement par rapport au support (32) sur un côté supérieur appelé dans la suite côté d'arrêt (17) à l'aide de moyens d'arrêt (38),
- dans lequel les moyens d'arrêt (38) sont entourés entièrement par le support (32),
- dans lequel la deuxième électrode de mesure (36) est entourée dans une région moyenne (40) à moitié le long de sa périphérie par le support (32),
- dans lequel le support (32) présente sur le côté (19) situé à l'opposé du côté d'arrêt (17) un moyen de maintien (42) pour la fixation radiale partielle de la deuxième électrode de mesure (36),
- dans lequel le moyen de maintien (42) est relié d'une seule pièce au support (32) et entoure la deuxième électrode de mesure (36) entièrement le long de sa périphérie,
- dans lequel l'extrémité de la deuxième électrode de mesure (36) sort librement vers le bas sur l'autre côté par rapport au côté d'arrêt (17), à la région moyenne (40) et au moyen de maintien (42).

2. Ensemble de capteur selon la revendication 1, **caractérisé en ce que** le support (32) est constitué de matière plastique.

3. Ensemble de capteur selon l'une quelconque des revendications précédentes, **caractérisé en ce que** les moyens d'arrêt (38) sont formés par une rainure périphérique sur les électrodes de mesure (14, 16).

4. Ensemble de capteur selon l'une quelconque des revendications précédentes, **caractérisé en ce que** le support (8) est réalisé par enrobage des électrodes de mesure (14, 16) avec le matériau électriquement non conducteur.

5. Ensemble de capteur selon l'une quelconque des revendications précédentes, **caractérisé en ce que** le moyen de maintien (42) est constitué par une région du support servant d'appui, en particulier par une région (43) entourant entièrement la périphérie des électrodes de mesure.

6. Ensemble de capteur selon l'une quelconque des revendications précédentes, **caractérisé en ce que** les électrodes de mesure (14, 16) sont rendues étanches à l'égard d'effets du liquide sur le côté d'arrêt (17) au moyen d'une région de recouvrement (48), en particulier d'une région d'enrobage de recouvrement accrochée (54) au support (32).

7. Ensemble de capteur selon la revendication 7, **caractérisé en ce qu'**une plaque de séparation (60) est disposée entre la région de recouvrement (48) et le support (32), pour le recouvrement d'éléments d'étanchéité (56, 58) assurant l'étanchéité des électrodes de mesure (14, 16).

8. Ensemble de capteur selon l'une quelconque des revendications précédentes, **caractérisé en ce qu'**un capteur de température (44), en particulier une résistance électrique (74) opérant comme capteur de température avec un coefficient de température négatif, est intégré.

9. Ensemble de capteur selon la revendication 8, **caractérisé en ce que** le capteur de température (44) est disposé à l'intérieur du support (32) à hauteur du côté (19) situé à l'opposé du côté d'arrêt.

10. Ensemble de capteur selon la revendication 9, **caractérisé en ce que** le support (32) présente une région tubulaire (52) disposée notamment au centre, à l'intérieur de laquelle le capteur de température (44) est disposé et qui est en liaison d'une seule pièce avec la région de recouvrement (48).

11. Réservoir (5) pour un liquide, en particulier pour un agent réducteur pour la dénitrification de gaz d'échappement d'un moteur à combustion interne, avec un ensemble de capteur (30) pour la détermination d'un niveau de remplissage du liquide selon l'une quelconque des revendications précédentes.
